# EUROPEAN PATENT APPLICATION

(11) **EP 3 825 457 A1**
(43) Date of publication of application: **26.05.2021**
(21) Application number: 19794397.0
(22) Date of filing: 18.10.2019
(51) Int. Cl.: D06P 1/94, D06P 1/44, D06P 3/52, D06P 3/60, D06B 9/02, D06B 9/06, D06B 13/00, D06B 23/20

(54) **SUPERCRITICAL CARBON DIOXIDE PRINTING AND DYEING PROCESS AND PRINTING AND DYEING SYSTEM THEREOF**

(30) Priority: 11.10.2019 CN 201910965342
(71) Applicant: Shanghai Fuludi Fluid Technology Co., Ltd., Shanghai 201109 (CN)
(72) Inventor: YANG, Jingfeng, Shanghai 201109 (CN)
(74) Representative: Wang, Bo
(86) International application number: PCT/CN2019/111798
(87) International publication number: WO 2021/068277

(57) **Abstract**

The invention discloses a supercritical carbon dioxide printing and dyeing process and system. The process comprises: Step (1), transforming liquid carbon dioxide into supercritical carbon dioxide; Step (2), mixing the supercritical carbon dioxide with a dye to form a dye solution; Step (3), transferring the dye solution into a dyeing kettle, and dyeing a spindle from a spindle inlet under the function of ultrasonic wave and bidirectional circulation; and Step (4), collecting a residual dye solution and performing a decompression and separation treatment, and respectively purifying, drying and recycling the separated dye and the separated supercritical carbon dioxide. The aforementioned printing and dyeing process and system do not produce dyeing wastewater and other wastes, and it can be green and clean with high economic benefit and remarkable environmental benefit, which can also achieve the purpose of recycling, continuous production, high output and low cost.

## Description

### FIELD OF THE INVENTION

The present invention relates to a technical field of printing and dyeing, and in particular, to a supercritical carbon dioxide printing and dyeing process and the system thereof.

### BACKGROUND OF THE INVENTION

The current existing supercritical carbon dioxide printing and dyeing process is only a semi-continuous process, in which a dyeing kettle has no thermal insulation that results in a large amount of thermal energy loss during the process; only a one-way circulation pump is configured during the dyeing process which causes a uniformity problem of dyed products; the existing dyeing auxiliaries do not have the best assisted dyeing effect; the existing supercritical carbon dioxide printing and dyeing process is not effectively combined with an ultrasonic procedure; and, the continuous recycling of the remaining dyeing solution is not realized. Due to the afore-mentioned disadvantages, the existing supercritical carbon dioxide printing and dyeing process is inefficient, high energy consumption, high cost and low economic efficiency. Also, the uniformity of the product does not meet requirements of the standard, and the process needs more cumbersome equipment.

Therefore, it is necessary to develop a process which shall be green and clean with continuous recycling, high output and low cost, so as to overcome or ameliorate at least one of the disadvantages in the prior art.

### SUMMARY OF THE INVENTION

In order to solve the existing problems in the prior art, the present invention provides a supercritical carbon dioxide printing and dyeing process and the system thereof.

Detailed technical solutions are as follows:
A first aspect of the present invention provides a supercritical carbon dioxide printing and dyeing process, comprising the steps of:
Step (1), pressurizing and heating liquid carbon dioxide, then transforming the liquid carbon dioxide into supercritical carbon dioxide;
Step (2), mixing the supercritical carbon dioxide with a dye to form a dye solution;
Step (3), transferring the dye solution into a dyeing kettle, and dyeing a spindle from a spindle inlet under the function of ultrasonic wave and bidirectional circulation, and then discharging the spindle from a spindle outlet to a next process after the dyeing of the spindle is mature; and
Step (4), collecting, decompressing and separating a residual dye solution after dyeing, and respectively purifying and drying separated dye and separated supercritical carbon dioxide, so as to recycle the separated dye as a dye raw material in Step (3) and recycle the separated supercritical carbon dioxide as a liquid carbon dioxide raw material in Step (1).

Preferably, in Step (1), the pressure of the carbon dioxide is pressurized to be ≥ 16MPa by using a pressurizing unit, and the temperature of the carbon dioxide is heated to be ≥80°C by using a heating unit.

Preferably, in Step (2), the process further comprises a step of adding a dyeing auxiliary to the dyeing solution.

Preferably, in Step (3), the dyeing solution and the spindle in the dyeing kettle are ultrasonically treated by using an ultrasonic generating unit with a working power of 600 W; and, the dyeing solution is circulated at a speed of 2.4 m/min using a bidirectional circulating pump, and the spindle is advanced and dyed in the dyeing kettle at a rate of 1.2 m/min.

Preferably, in Step (3), the process further comprises a step of performing thermal insulation treatment on the dyeing kettle during the dyeing process.

A second aspect of the present invention provides a supercritical carbon dioxide printing and dyeing system used in the above process, the system comprising a CO₂ storage tank, a dye tank, a dyeing kettle, a dye collection tank, a decompression cooling unit and an extraction separation unit;
wherein the CO₂ storage tank is connected in sequence to a filtration unit, a drying unit, a heating unit, a pressurizing unit and the dye tank through pipes, so that the carbon dioxide in the CO₂ storage tank can be transformed into supercritical carbon dioxide after being pressurized and heated, and the supercritical carbon dioxide can be transferred into the dye tank to mix with the dye to form a dye solution;
the dye tank is connected in sequence to an auxiliary tank, a flow meter and the dyeing kettle through pipes, so that the dye solution can be transferred into the dyeing kettle to dye a spindle from a spindle inlet, and the dyeing kettle is provided with at least one dual-core ultrasonic generating device and at least one bidirectional circulating pump;
the bottom of the dyeing kettle is connected in sequence to the dye collection tank and the decompression cooling unit through pipes, so that a residual dye solution after dyeing in the dyeing tank can be collected into the dye collection tank, and the residual dye solution can be decompressed and separated through the decompression cooling unit;
the top of the decompression cooling unit is connected in sequence to a purification unit, a filtration unit, a drying unit and the CO₂ storage tank through pipes, so as to recycle separated carbon dioxide gas into the CO₂ storage tank; and
the bottom of the decompression cooling unit is connected to the extraction separation unit through a pipe, so as to extract the separated dye solution and recycle the extracted dye into the dye tank, and/or recycle the extracted auxiliary into the auxiliary tank.

Preferably, the dyeing kettle comprises a pipe in the length of 24-25 meter, which is provided with an insulation layer, four ultrasonic generating units and four bidirectional circulating pumps.

Preferably, liquid feeding holes are respectively arranged at a distance of 1000 mm, 3000 mm, 5000 mm and 6000 mm from a spindle outlet of the dyeing kettle, and the liquid feeding holes are connected to the dye tank through pipes.

Preferably, liquid discharge holes are respectively arranged at a distance of 375 mm, 625 mm, 875 mm and 1125 mm from a spindle outlet of the dyeing kettle, and the liquid discharge holes are connected to the dye collection tank through pipes.

More preferably, each of the liquid discharge holes and the liquid feeding holes has a reducer structure, and each hole is composed of an upper hole and a lower hole, wherein the upper hole has a height of 20-30 mm and a diameter of 25-30 mm, and the lower hole has a height of 8- 12 mm and a diameter of 3-8 mm.

The foregoing technical solutions in the present invention have the following advantages or beneficial effects:
(1) By configuring four bidirectional circulating pumps, a set of forward cycle and reverse cycle in a unit of 4-5 minutes can be completed, thereby improving the uniformity of dyeing of the product; meanwhile, by adding four ultrasonic devices with the same frequency, the activities of dye molecules and dye auxiliary molecules can be increased, the diffusion and adsorption of dye molecules can be accelerated, and the dyeing efficiency can be improved;
(2) By adding auxiliary into the dissolved dye solution, the time of dyeing can be reduced, and the absorbability of the spindle to the dye can be stronger; particularly, a spindle can be successfully dyed within 30 minutes, and the spindle can be discharged from the spindle outlet to the product collection trolley at an interval of about 18 seconds;
(3) By adding a residual dye collector at the spindle outlet, the residual dye solution can be collected to the residual dye collector through holes arranged at a distance of 375 mm, 625 mm, 875 mm, and 1125 mm from the spindle outlet; the supercritical carbon dioxide can be separated from the dye and auxiliary in a decompression separation device, and the dye can be separated from the auxiliary by extraction; and, the supercritical carbon dioxide, dye and auxiliary can be respectively purified, dried and recycled to raw materials tanks; thereby the supercritical carbon dioxide printing and dyeing process in the present invention shall be green and clean with continuous recycling, high output and low cost.
(4) in the supercritical carbon dioxide printing and dyeing process/system in the present invention, the pressure can be reduced by 30% to 46%, and the dyeing temperature can be reduced by 25% to 33% compared with the ordinary equipment, which greatly reduces equipment cost and heating cost; meanwhile, compared with the existing process, the printing efficiency is increased by 16% to 33%; in addition, due to the configuration of the dual-core ultrasonic devices, the dyeing can be more uniform, the chromatic aberration of the inner and outer coils can be greatly reduced, and the color fastness of the fabric can be improved, specifically, the color fastness can be up to the fifth level.

### BRIEF DESCRIPTION OF THE DRAWINGS

The accompanying drawings, together with the specification, illustrate exemplary embodiments of the present disclosure, and, together with the description, serve to explain the principles of the present invention.
Fig. 1 is a schematic diagram of a supercritical carbon dioxide printing and dyeing system according to the present invention.
Fig. 2 is a schematic diagram of a dyeing kettle in the supercritical carbon dioxide printing and dyeing system according to the present invention
Fig. 3 is a partially enlarged schematic view showing the dyeing kettle of Fig. 2.
Fig. 4 is a schematic diagram of a spindle outlet of a dyeing kettle in the supercritical carbon dioxide printing and dyeing system according to the present invention.
Fig. 5 is a partially enlarged schematic view showing liquid discharge holes at the spindle outlet of the dyeing kettle of Fig. 4.

### DETAILED DESCRIPTION OF PREFERRED EMBODIMENTS OF THE INVENTION

The present invention will now be described more fully hereinafter with reference to the accompanying drawings, in which exemplary embodiments of the invention are shown. This invention may, however, be embodied in many different forms and should not be construed as limited to the embodiments set forth herein. Rather, these embodiments are provided so that this disclosure will be thorough and complete, and will fully convey the scope of the invention to those skilled in the art. Like reference numerals refer to like elements throughout.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises" and/or "comprising," or "includes" and/or "including" or "has" and/or "having" when used herein, specify the presence of stated features, regions, integers, steps, operations, elements, and/or components, but do not preclude the presence or addition of one or more other features, regions, integers, steps, operations, elements, components, and/or groups thereof.

Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and the present disclosure, and will not be interpreted in an idealized or overly formal sense unless expressly so defined herein.

As used herein, "around", "about" or "approximately" shall generally mean within 20 percent, preferably within 10 percent, and more preferably within 5 percent of a given value or range. Numerical quantities given herein are approximate, meaning that the term "around", "about" or "approximately" can be inferred if not expressly stated.

As used herein, the term "plurality" means a number greater than one.

Hereinafter, certain exemplary embodiments according to the present disclosure will be described with reference to the accompanying drawings.

### Embodiment 1

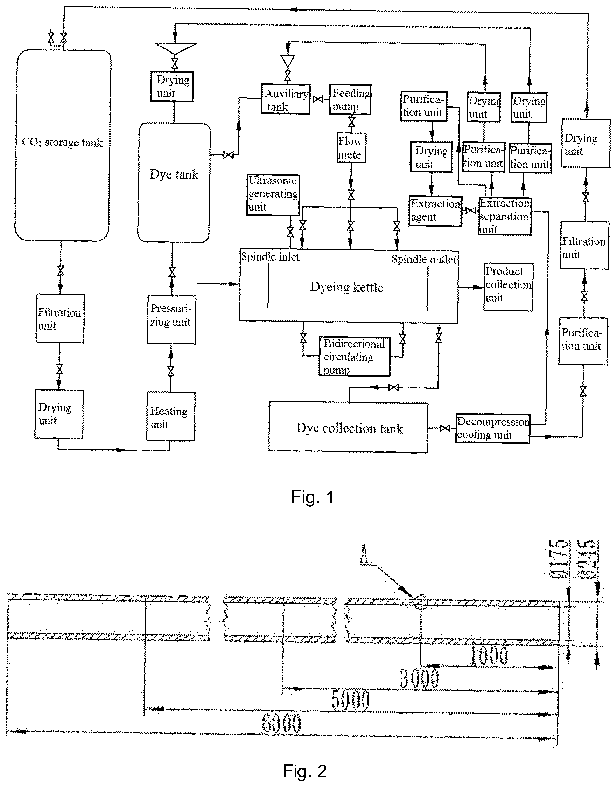

Referring to Fig. 1, an embodiment of the present invention provides a supercritical carbon dioxide printing and dyeing process, comprising the steps of:
Step (1), pressurizing and heating liquid carbon dioxide, then transforming the liquid carbon dioxide into supercritical carbon dioxide;
Step (2), mixing the supercritical carbon dioxide with a dye to form a dye solution;
Step (3), transferring the dye solution into a dyeing kettle, and dyeing a spindle from a spindle inlet under the function of ultrasonic wave and bidirectional circulation, and then transferring the spindle from a spindle outlet to a next process after the dyeing of the spindle is mature; and
Step (4), collecting a residual dye solution and performing a decompression and separation treatment, and respectively purifying and drying separated dye and separated supercritical carbon dioxide, so as to recycle the separated dye as a dye raw material in Step (3) and recycle the separated supercritical carbon dioxide as a liquid carbon dioxide raw material in Step (1).

In this embodiment, in Step (1), the pressure of the carbon dioxide is pressurized to be ≥16MPa by using a pressurizing unit, and the temperature of the carbon dioxide is heated to be ≥80°C by using a heating unit. That is, the carbon dioxide is transformed into supercritical carbon dioxide by the pressurizing unit and the heating unit, wherein the pressurizing unit can be a booster pump, and the heating unit can be a heater.

In this embodiment, in Step (2), the process further comprises a step of adding a dyeing auxiliary to the dyeing solution. The dyeing auxiliary is suitable for supercritical carbon dioxide printing, and the auxiliary in the residual dye solution can be separated from supercritical dioxide and dye to be recycled.

In this embodiment, in Step (3), the dyeing solution and the spindle in the dyeing kettle are ultrasonically treated by using an ultrasonic generating unit with a working power of 600 W, wherein the ultrasonic generating unit can be a dual-core ultrasonic generating device In the configuration of ultrasonic generating unit on the dyeing kettle, the activities of dye molecules and dye auxiliary molecules can be increased, the diffusion and adsorption of dye molecules can be accelerated, and the dyeing efficiency can be improved. Furthermore, in the configuration of bidirectional circulating pumps on the dyeing kettle, the forward cycle and reverse cycle of the dye in the dyeing kettle can be completed; thereby the uniformity of dyeing of the product can be improved. A set of forward cycle and reverse cycle in a unit of 4-5 minutes can be completed, and the rate of the bidirectional circulating pumps can be adjusted so as to change the recycle rate of the dye solution based on different fabrics. Specifically, the dyeing solution is circulated in the dyeing kettle at a speed of 2.4 m/min using a bidirectional circulating pump, and the spindle is advanced and dyed in the dyeing kettle at a rate of 1.2 m/min.

In this embodiment, in Step (3), the spindle to be dyed shall be heated, swelled and dried before entering into the dyeing kettle to improve the dyeing speed and dyeing quality of the dye in the dyeing kettle. Moreover, in Step (3), the process further comprises a step of performing thermal insulation treatment on the dyeing kettle during the dyeing process, which can be realized by adding a thermal insulation sleeve around the outside of the dyeing kettle. The design of thermal insulation can reduce heat loss and improve the stability of printing temperature during the printing and dyeing process, and it also can improve economic efficiency and reduce energy consumption.

### Embodiment 2

Referring to Fig. 1, an embodiment of the present invention provides a supercritical carbon dioxide printing and dyeing system used in the above process, the system comprising a CO₂ storage tank, a dye tank, a dyeing kettle, a dye collection tank, a decompression cooling unit and an extraction separation unit;
wherein the CO₂ storage tank is connected in sequence to a filtration unit, a drying unit, a heating unit, a pressurizing unit and the dye tank through pipes, so that the carbon dioxide in the CO₂ storage tank can be transformed into supercritical carbon dioxide after being pressurized and heated, and the supercritical carbon dioxide can be transferred into the dye tank to mix with the dye to form a dye solution;
the dye tank is connected in sequence to an auxiliary tank, a flow meter and the dyeing kettle through pipes, so that the dye solution can be transferred into the dyeing kettle to dye a spindle from a spindle inlet, and the dyeing kettle is provided with at least one dual-core ultrasonic generating device and at least one bidirectional circulating pump;
the bottom of the dyeing kettle is connected in sequence to the dye collection tank and the decompression cooling unit through pipes, so that a residual dye solution after dyeing in the dyeing tank can be collected into the dye collection tank, and the residual dye solution can be decompressed and separated trough the decompression cooling unit;
the top of the decompression cooling unit is connected in sequence to a purification unit, a filtration unit, a drying unit and the CO₂ storage tank through pipes, so as to recycle separated carbon dioxide gas into the CO₂ storage tank; and
the bottom of the decompression cooling unit is connected to the extraction separation unit through a pipe, so as to extract separated dye solution and recycle the extracted dye into the dye tank, and/or recycle the extracted auxiliary into the auxiliary tank.

In this embodiment, the supercritical carbon dioxide can be separated from the dye and auxiliary in the decompression cooling unit, and the dye can be separated from the auxiliary in the extraction separation unit. The separated supercritical carbon dioxide can be purified, filtered, dried and then be recycled to the CO₂ storage tank for use. The separated dye can be purified, dried and then be recycled to the dye tank for use. The separated auxiliary can be purified, dried and then be recycled to the auxiliary tank for use. Additionally, the dyed spindle can be collected by a product collection unit which is arranged after the dyeing kettle, wherein the product collection unit can be a transport trolley, preferably three transport trolleys, two of which are always in operation and the other one is in a pending state.

In this embodiment, as shown in Fig. 1, the dyeing kettle comprises a pipe in the length of 24-25 meter, which is provided with an insulation layer, four dual-core ultrasonic generating devices and four bidirectional circulating pumps.

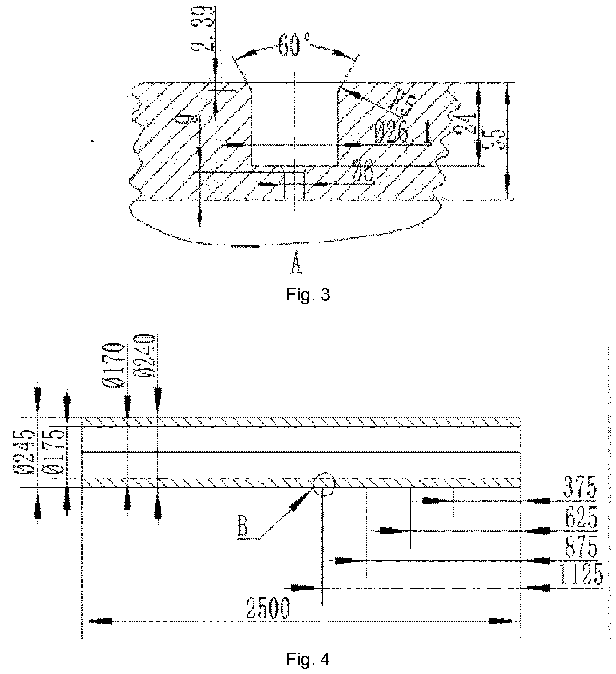

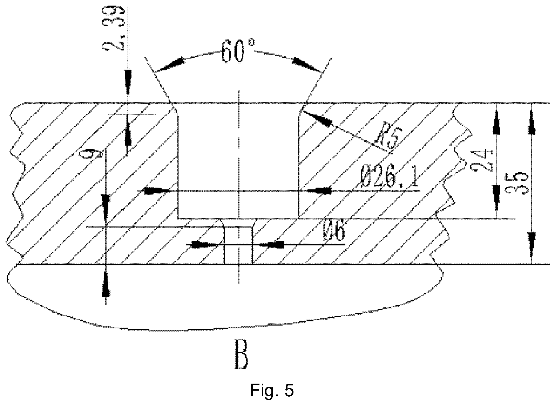

In this embodiment, as shown in Fig. 2 and Fig. 3, liquid discharge holes are respectively arranged at a distance of 375 mm, 625 mm, 875 mm and 1125 mm from the spindle outlet of the dyeing kettle, and the liquid discharge holes are connected to the dye collection tank through pipes. As shown in Fig. 4 and Fig. 5, liquid feeding holes are respectively arranged at a distance of 1000 mm, 3000 mm, 5000 mm and 6000 mm from the spindle outlet of the dyeing kettle, and the liquid feeding holes are connected to the dye tank through pipes. Each of the liquid discharge holes and the liquid feeding holes has a reducer structure, and each hole is composed of an upper hole and a lower hole, wherein the upper hole has a height of 20-30 mm and a diameter of 25-30 mm, and the lower hole has a height of 8- 12 mm and a diameter of 3-8 mm.

The working principle of the supercritical carbon dioxide printing and dyeing system is as follows: the liquid carbon dioxide is transferred in sequence from a CO₂ storage tank to a heating unit, a pressurizing unit, a dye tank, an auxiliary tank, a feeding pump and then enters into a dyeing kettle; a spindle from a spindle inlet is dyed under the combined function of ultrasonic wave, bidirectional circulation and auxiliary, in which an insulation layer is arranged around the outside of the dyeing kettle; then the spindle is discharged from a spindle outlet to a product collection trolley and then is transported to a next process after the dyeing of the spindle is mature; the residual dye is collected by a dye collector, the supercritical carbon dioxide can be separated from the dye and auxiliary in a decompression cooling unit, and the dye can be separated from the auxiliary by extraction in an extraction separation unit; and, the supercritical carbon dioxide, dye and auxiliary can be respectively purified, dried and recycled to raw materials tanks. The aforementioned printing and dyeing process does not produce dyeing wastewater and other wastes, and it can be green and clean with high economic benefit and remarkable environmental benefit, which can also achieve the purpose of recycling, continuous production, high output and low cost.

### Application embodiment 1

According to the printing and dyeing process/system in the Embodiment 1 and Embodiment 2, the present application embodiment provides a synthetic fiber (polyester fabric) dyeing process under the condition of the process equipment mentioned in the Embodiment 1 and Embodiment 2. As shown in Fig. 1, the process is a completely automatic process which is composed of six sections. The process comprises a carbon dioxide storage section, a pressurizing section, a heating section, a dye section, a double-cycle ultrasonic printing and dyeing section, and a separation and recovery section.

During the printing and dyeing process, the liquid carbon dioxide is transferred in sequence from a CO₂ storage tank to a pressurizing unit, a heating unit, a dye tank, an auxiliary tank, a feeding pump and then enters into a dyeing kettle; a feed from a spindle inlet, which has been pre-heated and dried, is dyed under the combined function of KC-TC01 dual-core ultrasonic wave and bidirectional circulation, in which the pressurizing unit uses a booster pump to make the pressure of the carbon dioxide to be ≥16MPa, the heating unit uses a heater to make the temperature of the carbon dioxide to be ≥ 100 °C; the supercritical carbon dioxide can dissolve with the dye in the dye tank to form a dye solution; the auxiliary tank does not need to add any additives, and the dye solution only needs to pass directly through the auxiliary tank; the KC-TC01 dual-core ultrasonic device has a working power of 600 W, the dyeing solution is circulated at a speed of 2.4 m/min using a bidirectional circulating pump in order to improve the uniformity of dye, and the spindle is advanced and dyed in the dyeing kettle at a rate of 1.2 m/min. Then, the spindle is discharged from a spindle outlet to a product collection trolley and then is transported to a next process after the dyeing of the spindle is mature; the residual dye is collected by a dye collector, the supercritical carbon dioxide can be separated from the dye in a decompression separating device, and the dye can be separated by extraction; and, the supercritical carbon dioxide and dye can be respectively purified, dried and recycled to raw materials tanks.

### Application embodiment 2

According to the printing and dyeing process/system in the Embodiment 1 and Embodiment 2, the present application embodiment provides a natural fiber (cotton, hemp, or wool fabric) dyeing process under the condition of the process equipment mentioned in the Embodiment 1 and Embodiment 2. As shown in Fig. 1, the process is a completely automatic process which is composed of seven sections. The process comprises a carbon dioxide storage section, a pressurizing section, a heating section, a dye section, an auxiliary section, a double-cycle ultrasonic printing and dyeing section, and a separation and a recovery section.

During the printing and dyeing process, the liquid carbon dioxide is transferred in sequence from a CO₂ storage tank to a pressurizing unit, a heating unit, a dye tank, an auxiliary tank, a feeding pump and then enters into a dyeing kettle; a feed from a spindle inlet, which has been pre-heated, swelled with absolute ethanol and dried, is dyed under the combined function of KC-TC01 dual-core ultrasonic wave and bidirectional circulation, in which a thermal insulation sleeve is arranged around the outside of the dyeing kettle; the pressurizing unit makes the pressure of the carbon dioxide to be ≥16MPa, the heating unit makes the temperature of the carbon dioxide to be ≥80°C; the supercritical carbon dioxide can dissolve with the dye in the dye tank to form a dye solution; the auxiliary tank needs to add absolute ethanol as a dyeing additive, so that the reactive dye can be more fully dissolved in the supercritical carbon dioxide to make the dyeing solution more uniform; the KC-TC01 dual-core ultrasonic device has a working power of 600 W, the dyeing solution is circulated at a speed of 3 m/min using a bidirectional circulating pump in order to improve the uniformity of dye, and the spindle is advanced and dyed in the dyeing kettle at a rate of 1.2 m/min. Then, the spindle is discharged from a spindle outlet to a product collection trolley and then is transported to a next process after the dyeing of the spindle is mature; the residual dye is collected by a dye collector, the supercritical carbon dioxide can be separated from the dye and auxiliary in a decompression separation device, and the dye can be separated from the auxiliary by extraction; and, the supercritical carbon dioxide, dye and auxiliary can be respectively purified, dried and recycled to raw materials tanks.

In summary, according to the above Application embodiment 1 and Application embodiment 2, a spindle can be successfully dyed within 30 minutes, the spindle can be discharged from the spindle outlet at an interval of about 18 seconds, and the length of all the devices can be controlled within 30 m. Compared with the existing process in the prior art, the process in the present invention can increase the printing efficiency by at least about 16%, decrease the total size of equipment by about 25%, and reduce the cost by at least about 10%. In the present invention, the printing and dyeing process of synthetic fiber and natural fiber by using supercritical carbon dioxide can be green and clean with continuous recycling, high output and low cost, and the dyeing uniformity inside and outside of the spindle can be improved and the color fastness of the fabric can be improved, specifically, the color fastness can be up to the fifth level.

Once the nature of the invention has been sufficiently described, as well as preferred embodiment, it is stated to the appropriate effects that the described elements may be modified, provided that this does not imply an alteration of the essential characteristics of the invention, which are claimed below.

## Claims

1. A supercritical carbon dioxide printing and dyeing process, **characterized in that** the process comprising steps of:
Step (1), pressurizing and heating liquid carbon dioxide, then transforming the liquid carbon dioxide into supercritical carbon dioxide;
Step (2), mixing the supercritical carbon dioxide with a dye to form a dye solution;
Step (3), transferring the dye solution into a dyeing kettle, and dyeing a spindle from a spindle inlet under the function of ultrasonic wave and bidirectional circulation, and then discharging the spindle from a spindle outlet after the dyeing of the spindle is mature; and
Step (4), collecting a residual dye solution and performing a decompression and separation treatment, and respectively purifying and drying separated dye and separated supercritical carbon dioxide, so as to recycle the separated dye as a dye raw material in Step (3) and recycle the separated supercritical carbon dioxide as a liquid carbon dioxide raw material in Step (1).

2. The supercritical carbon dioxide printing and dyeing process as claimed in Claim 1, wherein in Step (1), the pressure of the carbon dioxide is pressurized to be ≥16MPa by using a pressurizing unit, and the temperature of the carbon dioxide is heated to be ≥80°C by using a heating unit.

3. The supercritical carbon dioxide printing and dyeing process as claimed in Claim 1, wherein in Step (2), the process further comprises a step of adding a dyeing auxiliary to the dyeing solution.

4. The supercritical carbon dioxide printing and dyeing process as claimed in Claim 1, wherein in Step (3), the dyeing solution and the spindle in the dyeing kettle are ultrasonically treated by using an ultrasonic generating unit with a working power of 600 W; and, the dyeing solution is circulated at a speed of 2.4 m/min using a bidirectional circulating pump, and the spindle is advanced and dyed in the dyeing kettle at a rate of 1.2 m/min.

5. The supercritical carbon dioxide printing and dyeing process as claimed in Claim 1, wherein in Step (3), the process further comprises a step of performing thermal insulation treatment on the dyeing kettle during the dyeing process.

6. A supercritical carbon dioxide printing and dyeing system used in the process as claimed in any one of Claims 1-5, **characterized in that** the system comprising a CO₂ storage tank, a dye tank, a dyeing kettle, a dye collection tank, a decompression cooling unit and an extraction separation unit;
wherein the CO₂ storage tank is connected in sequence to a filtration unit, a drying unit, a heating unit, a pressurizing unit and the dye tank through pipes, so that the carbon dioxide in the CO₂ storage tank can be transformed into supercritical carbon dioxide after being pressurized and heated, and the supercritical carbon dioxide can be transferred into the dye tank to mix with the dye to form a dye solution;
the dye tank is connected in sequence to an auxiliary tank, a flow meter and the dyeing kettle through pipes, so that the dye solution can be transferred into the dyeing kettle to dye a spindle from a spindle inlet, and the dyeing kettle is provided with at least one dual-core ultrasonic generating device and at least one bidirectional circulating pump;
the bottom of the dyeing kettle is connected in sequence to the dye collection tank and the decompression cooling unit through pipes, so that a residual dye solution after dyeing in the dyeing tank can be collected into the dye collection tank, and the residual dye solution can be decompressed and separated in the decompression cooling unit;
the top of the decompression cooling unit is connected in sequence to a purification unit, a filtration unit, a drying unit and the CO₂ storage tank through pipes, so as to recycle separated carbon dioxide gas into the CO₂ storage tank; and
the bottom of the decompression cooling unit is connected to the extraction separation unit through a pipe, so as to extract separated dye solution and recycle the extracted dye into the dye tank, and/or recycle extracted auxiliary into the auxiliary tank.

7. The supercritical carbon dioxide printing and dyeing system as claimed in Claim 6, wherein the dyeing kettle comprises a pipe in the length of 24-25 meter, which is provided with an insulation layer, four ultrasonic generating units and four bidirectional circulating pumps.

8. The supercritical carbon dioxide printing and dyeing system as claimed in Claim 6, wherein liquid feeding holes are respectively arranged at a distance of 1000 mm, 3000 mm, 5000 mm and 6000 mm from a spindle outlet of the dyeing kettle, and the liquid feeding holes are connected to the dye tank through pipes of the spindle outlet.

9. The supercritical carbon dioxide printing and dyeing system as claimed in Claim 6, wherein liquid discharge holes are respectively opened at 375 mm, 625 mm, 875 mm and 1125 mm from a spindle outlet of the dyeing kettle, and the liquid discharge holes are connected to the dye collection tank through pipes.

10. The supercritical carbon dioxide printing and dyeing system as claimed in Claim 8 or Claim 9, wherein each of the liquid discharge holes and the liquid feeding holes has a reducer structure, and each hole is composed of an upper hole and a lower hole, in which the upper hole has a height of 20-30 mm and a diameter of 25-30 mm, and the lower hole has a height of 8- 12 mm and a diameter of 3-8 mm.
